# EUROPEAN PATENT APPLICATION

(11) **EP 2 765 399 A1**
(43) Date of publication of application: **13.08.2014**
(21) Application number: 14154032.8
(22) Date of filing: 05.02.2014
(51) Int. Cl.: G01F 23/296, G01N 29/12

(54) **Method and program for determining the quantity of gas in a gas bottle using a smart phone, and a smart phone programmed for this purpose**

(30) Priority: 12.02.2013 NL 2010286
(71) Applicant: Primagaz Nederland B.V., 7202 AN Zutphen (NL)
(72) Inventor: Peters, Johannes Wilhelmus Maria, 6846 BD Arnhem (NL); Van 'T Ende, Bart, 7511 JP Enschede (NL)
(74) Representative: Eveleens Maarse, Pieter

(57) **Abstract**

The invention relates to a method for determining the quantity of gas in a gas bottle (1), comprising of setting the gas bottle into vibration, detecting the vibrations generated by the gas bottle, determining the primary frequency of the vibrations generated by the gas bottle and reading from a table the quantity of gas in the gas bottle associated with the primary frequency, wherein detecting the vibrations, determining the primary frequency and looking-up in the table takes place in a smart phone (5). The invention also relates to an associated smart phone and an associated program. The content of a gas bottle can thus be determined without specific measuring equipment, but with a smart phone usually available in a household.

## Description

Gas bottles are used for, among other purposes, transporting and storing combustible gas such as propane and butane. In order to enable accommodation of an economically attractive quantity of gas in a gas bottle the gas has to be compressed to the liquid state, for which purpose the gas has to be brought and held under pressure. In order to be able to withstand such a pressure and to impart sufficient durability and strength to the gas bottles, such gas bottles are manufactured from metal. It is not therefore possible to look into the gas bottle to see the height of the liquid level in the gas bottle. This is the case for gas bottles or cartridges which can be discarded when empty, but particularly for larger refillable bottles. Gas bottles for once-only use are quite small so that they can be held in the hand and the weight and the content can thus be estimated. This is not an option for refillable gas bottles since the bottles are on the one hand much larger and heavier, and the empty weight of such a gas bottle is on the other much greater than that of a refillable gas bottle so that the bottle itself always forms a large part of the gross weight and estimating the net weight, and thereby the quantity of gas in the bottle, is difficult.

In order to nevertheless enable the quantity of gas in a gas bottle to be determined, US-B-7 946 168 provides a method for determining the quantity of gas in a gas bottle, comprising the steps of setting the gas bottle into vibration, detecting the vibrations generated by the gas bottle, determining the primary frequency of the vibrations generated by the gas bottle and reading from a table the quantity of gas in the gas bottle associated with the primary frequency. The primary frequency is understood to mean the frequency at which the amplitude of the vibration is greatest.

This prior art method provides in principle a solution for determining the content of a gas bottle. It makes use of the fact that the primary vibration frequency or eigenfrequency of a gas bottle depends on the degree of filling of the gas bottle. A similar effect is for instance also observed with glasses, wherein the vibration frequency of a glass varies with the level of the liquid in the glass. This method requires a great deal of equipment, such as a frequency analyzer, a table, a hammer or striker to strike the gas bottle in order to set it into vibration, and a support surface with the necessary flexibility which causes little damping of the vibrations of the gas bottle. Such means are not usually present in the average household.

The object of the invention is to provide such a method which can be performed without the presence of measuring equipment.

This object is achieved with a method of the above elucidated type, wherein detecting the vibrations, determining the primary frequency and looking-up in the table takes place in a smart phone. This invention makes use of the fact that a smart phone is provided with a microphone, a processor and a memory, wherein the smart phone can be programmed to perform such a method.

A smart phone is understood to mean not only mobile phones configured for communication with the internet and configured to execute programs, but also other small electronic devices provided with the above stated components such as iPods, iPads and other tablet computers.

Such devices are available in many households so that the method can be performed without further equipment. This is for instance convenient at the start of the barbecuing season, when the gas bottle has to be connected to the barbecue and it is not known how much gas is still left in the bottle. Application of the method according to the invention makes it easily possible to determine how much gas is still available and whether or not a new gas bottle has to be purchased.

The present invention likewise relates to a device for determining the quantity of gas in a gas bottle, comprising a microphone for detecting sound generated by the gas bottle, analysis means connected to the microphone for the purpose of determining the primary frequency of the sound vibrations generated by the gas bottle, a memory for storing a table which indicates the relation between the primary frequency and the quantity of gas in the gas bottle, a look-up circuit for looking up the quantity of gas in the bottle associated with the primary frequency, and output means for displaying the determined quantity of gas in the bottle, wherein the microphone, the analysis means, the memory, the look-up circuit and the output means are incorporated into a smart phone, and that the smart phone is provided with a processor configured to perform the functions of the analysis means and of the look-up circuit and to control the microphone and the output means.

Preferably the analysis means are adapted to record the sound observed by the microphone of the smart phone during a period, subjecting the sound recorded during this period to a fast Fourier transform and to determine the primary frequency from the results of the fast Fourier transform.

Further it is preferred that the analysis means are adapted to start the recording of the sound after the observation of a sound peak.

According to a first preferred embodiment, the type specification of the gas bottle is entered into the smart phone prior to the gas bottle being set into vibration, and the smart phone selects the table associated with the relevant type of gas bottle. Account is hereby taken of different types of gas bottle, each having different relations between primary frequency and net content.

The same embodiment provides a smart phone of the above stated type wherein the smart phone is provided with input means, the memory of the smart phone is provided with different tables which are each associated with a type of gas bottle, and the processor of the smart phone is configured to retrieve the type of the gas bottle via the input and output means and to select the table associated with the relevant type of gas bottle.

It is in principle not precluded for the smart phone to be held against the gas bottle, although, in view of the sensitivity of the microphones now usually available in smart phones and the computing power of the processor, the smart phone can be held clear of, but still in the vicinity of the gas bottle during detection of the vibrations generated by the gas bottle. Further convenience of use is hereby obtained. This is because the microphones built into smart phones are usually configured to isolate vibrations of the device itself as far as possible so as to avoid acoustic feedback between loudspeaker and microphone.

The convenience of use is further enhanced when, after determining the quantity of gas in the gas bottle, the smart phone converts the quantity of gas in the gas bottle to a period of time in which the remaining quantity of gas will be used. The consumption of the appliance for connecting has to be entered for this purpose.

The same embodiment likewise provides such a smart phone, wherein the processor is configured to retrieve via the input and output means the consumption of an appliance for connecting to the gas bottle and to calculate the remaining period of use of the appliance from the entered consumption and the quantity of gas read from the table.

In the prior art device and method separate means are provided for the purpose of 'striking' the gas bottle. The high sensitivity of the microphones of smart phones makes it possible to strike the gas bottle with for instance a foot, a hammer or with barbecue tongs, wherein the resultingly smaller amplitude of the vibration is still sufficient to perform a meaningful analysis.

The vibration function usually available on a smart phone also makes it possible however for the setting of the gas bottle into vibration to take place by bringing the smart phone into contact with the gas bottle and having the smart phone vibrate in contact with the gas bottle.

This embodiment therefore also provides for a smart phone of the above stated type provided with a vibrator, wherein the processor is configured to temporarily activate the vibrator of the smart phone prior to detection of the sound generated by the gas bottle.

In order to provide a smart phone configured to perform the above stated functions, the invention also provides a smart phone of the above stated type, wherein the operations to be performed by the processor are stored in a program and the program is stored together with the table in a memory of the smart phone.

The invention also relates however to a program for programming a smart phone in order to obtain a smart phone of the above stated type or for having a smart phone perform a method according to the methods elucidated above.

In order to place the program in the memory of the computer, the program can be downloadable via the internet to a smart phone.

The present invention will now be elucidated with reference to the accompanying drawings, in which:
Figure 1 is a side view of a gas bottle in combination with a hammer and a smart phone for use in the invention;
Figure 2 is a block diagram representing the diverse functions performed by the smart phone; and
Figure 3 is a block diagram of a number of parts of a smart phone which are used when performing the method according to the invention.

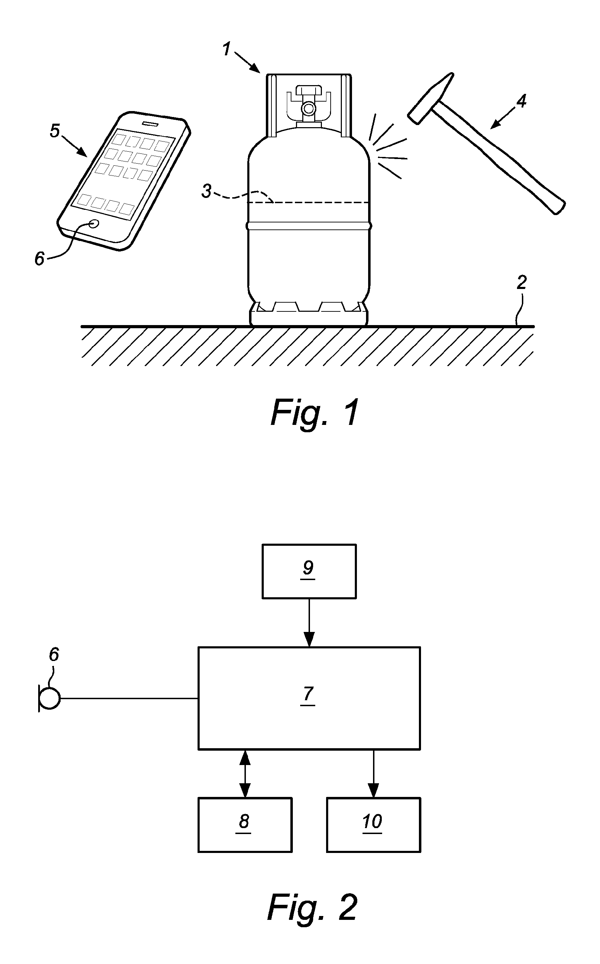

Figure 1 shows a steel gas bottle 1 which is placed on a surface 2. It is assumed here that the gas bottle can be placed on a firm ground surface, such as the tiles of a patio, although it is not precluded that gas bottle 1 has to be placed on a resilient surface such as a rubber tile or a wooden table. The level of the gas present in liquid form in gas bottle 1 is indicated with a broken line 3. For the purpose of setting gas bottle 1 into vibration use is made of a hammer 4, although other means for setting gas bottle 1 into vibration are not precluded. A smart phone 5, shown next to gas bottle 1, is also necessary for performing the method according to the invention.

Smart phone 5 is provided with at least the components and parts shown in figure 2, i.e. a microphone 6, a processor 7, a memory 8, an input member 9 and a display 10. These parts are present in all smart phones since they are essential for performing the normal functions of a smart phone. The input member, together with the display, usually takes the form here of a touchscreen. Means are preferably also present for 'downloading' the present program, although the program being provided from a carrier such as an SD-card or a USB stick is not precluded.

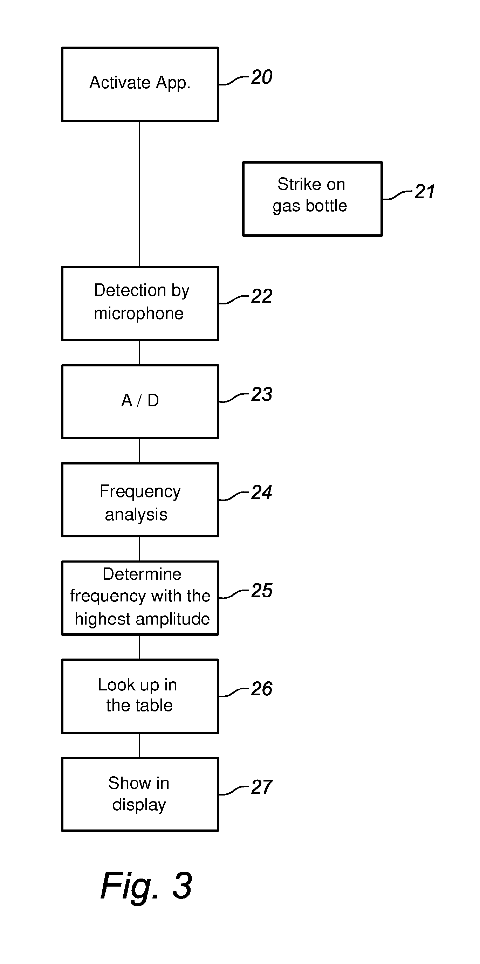

The operation of the parts described up to this point will now be described. The relevant program, which can otherwise be structured as a so-called 'app' in smart phone 5, is initially activated, as shown in step 20 in figure 3. Gas bottle 1 is then struck with hammer 4 in step 21. As a result of being struck this gas bottle 1 will begin to vibrate at diverse frequencies. The manner of vibrating, in particular the primary frequency of the vibrations, being the vibration frequency with the highest amplitude, depends on the degree of filling of the gas bottle. The strike is observed by the microphone of the smart phone and the processor of the smartphone is programmed to start the measuring period after observation of the strike. It is however also possible to make the measuring period start by a signal given by the user. The vibrations of gas bottle 1 generate air vibrations, i.e. sound, which is detected by microphone 6 of the smart phone during the measuring period as shown in step 22. During the measuring period the analog signal is converted in step 23 to a digital signal by an A/D converter 7 present in the smart phone. The frequency-amplitude characteristic of the thus obtained digital signal is then determined in step 24, for instance by applying a Fast Fourier Transform, although other algorithms are not precluded. Subsequently the frequency with the highest amplitude from the thus obtained frequency-amplitude characteristic is determined in step 25. In step 26 the quantity of gas associated with this frequency is looked up in the table in the memory. The looked-up quantity of gas is then shown in the display in step 27. To remove by filtering unwanted additional sounds the frequency range is limited to the frequency range in which resonance of the gas bottle is expected. According to a preferred embodiment this frequency range extends between 500 Hz and 1500 Hz.

The above elucidated method is suitable for determining the quantity of gas in a gas bottle whose specifications, such as nominal content and the relation between quantity of gas and frequency, are known. More types of gas bottle are in circulation however, each with their associated specifications. It is therefore attractive to include the relevant specifications for each of these types of gas bottle in the table and to arrange an options menu in the program in which the user can indicate the type of gas bottle used.

It is also attractive to have the processor convert the calculated quantity of gas to the remaining operating time of an appliance for connecting to the gas bottle, such as a barbecue or a patio heater. The nominal gas consumption of the appliance for connecting must of course be entered for this purpose. Use can be made for this purpose of a table which indicates the consumption per unit of time of various common types of gas appliance and the user need only enter the type of gas appliance, although it is likewise possible for the user him/herself to simply enter the gas consumption per unit of time.

In the above elucidated embodiments vibrations in the gas bottle are initiated by the blow with a hammer or another heavy object. It is however also possible to make use of the vibration function usually available in a smart phone, which is normally used to produce a silent ringtone. It is possible to use the vibration function of the smart phone to initiate vibrations in the gas bottle. The smart phone must for this purpose be held with its housing against the gas bottle. After several seconds the gas bottle will be set into vibration and the air vibration caused by the vibrations of the gas bottle can be detected by means of the microphone of the smart phone which has meanwhile been moved away from the gas bottle. It is however essential for this embodiment that the primary frequency of the gas bottle or a harmonic frequency thereof is present in the spectrum of the vibrations generated by the smart phone. Not otherwise precluded is that, in the selection of the type of gas bottle, the analysis circuit and the subsequent selection circuits are already prepared for the frequency range associated with this type of gas bottle.

## Claims

1. Method for determining the quantity of gas in a gas bottle, comprising the following steps of:
- setting the gas bottle into vibration;
- detecting the vibrations generated by the gas bottle;
- determining the primary frequency of the vibrations generated by the gas bottle;
- reading from a table the quantity of gas in the gas bottle associated with the primary frequency,
**characterized in that** detecting the vibrations, determining the primary frequency and looking-up in the table takes place in a smart phone.

2. Method as claimed in claim 1, **characterized in that** the nominal size of the gas bottle is entered into the smart phone prior to the gas bottle being set into vibration, and that the smart phone selects the table associated with the relevant nominal size of the gas bottle.

3. Method as claimed in claim 1 or 2, **characterized in that** the smart phone is held clear of, but still in the vicinity of the gas bottle during detection of the vibrations generated by the gas bottle.

4. Method as claimed in claim 1, 2 or 3, **characterized in that** after determining the quantity of gas in the gas bottle, the smart phone converts the quantity of gas in the gas bottle to a period of time in which the remaining quantity of gas will be used.

5. Method as claimed in any of the foregoing claims, **characterized in that** setting the gas bottle into vibration takes place by striking the gas bottle.

6. Method as claimed in any of the claims 1-4, **characterized in that** setting the gas bottle into vibration takes place by bringing the smart phone into contact with the gas bottle and having the smart phone vibrate in contact with the gas bottle.

7. Device for determining the quantity of gas in a gas bottle, comprising:
- a microphone for detecting sound generated by the gas bottle;
- analysis means connected to the microphone for the purpose of determining the primary frequency of the sound vibrations generated by the gas bottle;
- a memory for storing a table which indicates the relation between the primary frequency and the quantity of gas in the gas bottle;
- a look-up circuit for looking up the quantity of gas in the bottle associated with the primary frequency; and
- output means for displaying the determined quantity of gas in the bottle, **characterized in that** the microphone, the analysis means, the memory, the look-up circuit and the output means are incorporated into a smart phone, and that the smart phone is provided with a processor configured to perform the functions of the analysis means and of the look-up circuit and to control the microphone and the output means.

8. Smart phone as claimed in claim 7, **characterized in that** the analysis means are adapted to record the sound observed by the microphone of the smart phone during a period, to subject the sound recorded during this period to a fast Fourier transform and to determine the primary frequency from the results of the fast Fourier transform.

9. Smart phone as claimed in claim 8, **characterized in that** the analysis means are adapted to start the recording of the sound after the observation of a sound peak.

10. Smart phone as claimed in claim 7, 8 or 9 **characterized in that** the smart phone is provided with input means, that the memory of the smart phone is provided with different tables which are each associated with a nominal size of a gas bottle, and that the processor of the smart phone is configured to retrieve the nominal size of the gas bottle via the input and output means and to select the table associated with the nominal size of the gas bottle.

11. Smart phone as claimed in any of the claims 7-10, **characterized in that** the processor is configured to retrieve via the input and output means the consumption of an appliance for connecting to the gas bottle and to calculate the remaining period of use of the appliance from the entered consumption and the quantity of gas read from the table.

12. Smart phone as claimed in any of the claims 7-11, **characterized in that** the smart phone is provided with a vibrating element and that the processor is configured to activate the vibrating element of the smart phone prior to detection of the sound generated by the gas bottle.

13. Smart phone as claimed in any of the claims 7-12, **characterized in that** the operations to be performed by the processor are stored in a program and that the program is stored together with the table in a memory of the smart phone.

14. Program for programming a smart phone in order to obtain a smart phone as claimed in any of the claims 7-13.

15. Program as claimed in claim 14, **characterized in that** the program is downloadable via the internet to a smart phone.
